# EUROPEAN PATENT APPLICATION

(11) **EP 3 981 852 A1**
(43) Date of publication of application: **13.04.2022**
(21) Application number: 21195807.9
(22) Date of filing: 09.09.2021
(51) Int. Cl.: C09J 7/38, C09J 133/02

(54) **AQUEOUS DISPERSION TYPE PRESSURE-SENSITIVE ADHESIVE COMPOSITION AND PRESSURE-SENSITIVE ADHESIVE TAPE**

(30) Priority: 05.10.2020 JP 2020168634
(71) Applicant: Nitto Denko Corporation, Ibaraki-shi Osaka 567-8680 (JP)
(72) Inventor: Sawamura, Amane, Ibaraki-shi, Osaka (JP); Yamamoto, Shuhei, Ibaraki-shi, Osaka (JP); Takahashi, Akiko, Ibaraki-shi, Osaka (JP)
(74) Representative: Grünecker Patent- und Rechtsanwälte PartG mbB

(57) **Abstract**

An aqueous dispersion type pressure-sensitive adhesive composition comprising: polymer particles containing a polymer of a monomer component containing alkyl (meth) acrylate and (meth)acrylic acid; water dispersing the polymer particles; and an ammonium ion existing in the water. The median size of the polymer particles is 0.10 µm or more. The pH of the aqueous dispersion type pressure-sensitive adhesive composition exceeds 9.0.

## Description

The present invention relates to an aqueous dispersion type pressure-sensitive adhesive composition and a pressure-sensitive adhesive tape.

### TECHNICAL FIELD

There is a known aqueous dispersion type acrylic pressure-sensitive adhesive composition obtained by dissolving acrylic polymer particles into water (for example, see Patent Document 1). The monomer components constituting the acrylic polymer particles contain alkyl (meth) acrylate and (meth)acrylic acid. Further, in the aqueous dispersion type acrylic pressure-sensitive adhesive composition, ammonia is added after the polymerization of the polymer particles, thereby neutralizing the carboxyl groups derived from the (meth)acrylic acid.

### BACKGROUND ART

In Patent Document 1, the aqueous dispersion type acrylic pressure-sensitive adhesive composition is continuously applied to a substrate with a coater, thereby forming a pressure-sensitive adhesive layer. The coater includes, for example, a roll or a die. When being applied with the coater, the aqueous dispersion type pressure-sensitive adhesive composition is conveyed through the gap between the rolls, or is discharged from the gap between the dies.

### Citation List

### Patent Document

Patent Document 1: Japanese Unexamined Patent Publication No. 2003-155462.

### SUMMARY OF THE INVENTION

### PROBLEM TO BE SOLVED BY THE INVENTION

However, in the aqueous dispersion type pressure-sensitive adhesive composition described in Patent Document 1, the acrylic polymer particles are easily aggregated. Thus, the polymer particles aggregate in the gap of the coater. At the place where the aggregation occurs, the conveyance and discharge of the aqueous dispersion type pressure-sensitive adhesive composition stagnate. Accordingly, there is a disadvantage that a line defect is formed in the pressure-sensitive adhesive layer along a conveyance direction in which the substrate is conveyed.

The present invention provides an aqueous dispersion type pressure-sensitive adhesive composition and ae pressure-sensitive adhesive tape that can suppress the formation of a line defect in the pressure-sensitive adhesive layer.

### MEANS FOR SOLVING THE PROBLEM

The present invention [1] includes an aqueous dispersion type pressure-sensitive adhesive composition comprising: polymer particles made of a polymer of a monomer component containing alkyl (meth) acrylate and (meth)acrylic acid; water dispersing the polymer particles; and an ammonium ion existing in the water, wherein a median size of the polymer particles is 0.10 µm or more, and a pH of the aqueous dispersion type pressure-sensitive adhesive composition exceeds 9.0.

The present invention [2] includes a pressure-sensitive adhesive tape described in [1] above, a substrate layer; and a pressure-sensitive adhesive layer disposed on a one-side surface in a thickness direction of the substrate layer and formed of the aqueous dispersion type pressure-sensitive adhesive composition according to Claim 1.

The present invention [3] includes the pressure-sensitive adhesive tape described in [2] above, wherein the pressure-sensitive adhesive layer has a thickness of 40 µm or less.

The present invention [4] includes the pressure-sensitive adhesive tape described in [2] or [3], wherein a content of the ammonium ions in the pressure-sensitive adhesive layer is 800 µg/g or more..

### EFFECTS OF THE INVENTION

The aqueous dispersion type pressure-sensitive adhesive composition and pressure-sensitive adhesive tape of the present invention can suppress the formation of a line defect in the pressure-sensitive adhesive layer.

### BRIEF DESCRIPTION OF THE DRAWINGS

[FIG. 1] FIG. 1 is a cross-sectional view of an embodiment of the pressure-sensitive adhesive tape of the present invention.
[FIG. 2] FIG. 2 is a cross-sectional view of a variation of the pressure-sensitive adhesive tape.

### DESCRIPTION OF THE EMBODIMENTS

### <Aqueous dispersion type pressure-sensitive adhesive composition>

The aqueous dispersion type pressure-sensitive adhesive composition of the present invention contains polymer particles, water, and ammonium ions.

The polymer particles are each made of polymers of monomer components. The monomer components each contain alkyl (meth) acrylate and (meth)acrylic acid.

The alkyl (meth) acrylate is the principal monomer or base monomer in the monomer component. The alkyl (meth)acrylate is alkyl methacrylate and/or alkyl acrylate. Hereinafter, the word fragment (meth) will be used and defined in the same manner as described above. Examples of alkyl (meth) acrylate include alkyl (meth) acrylate containing an alkyl group having 2 to 14 carbon atoms. Preferably, the alkyl group has 4 or more and 12 or less carbon atoms. Specifically, examples of alkyl (meth)acrylate include ethyl (meth)acrylate, propyl (meth)acrylate, isopropyl (meth)acrylate, butyl (meth)acrylate, isobutyl (meth)acrylate, isopentyl (meth)acrylate, hexyl (meth)acrylate, heptyl (meth)acrylate, 2-ethylhexyl (meth)acrylate, octyl (meth)acrylate, nonyl (meth)acrylate, decyl (meth)acrylate, dodecyl (meth)acrylate, undecyl (meth)acrylate, tridecyl (meth)acrylate, and tetradecyl (meth)acrylate. The alkyl (meth)acrylates can be used singly or in combination. Preferable examples of the alkyl (meth)acrylate include butyl (meth)acrylate and 2-ethylhexyl (meth)acrylate. The ratio of alkyl (meth)acrylate in the monomer component is, for example, 90 mass% or more, preferably 95 mass% or more and, for example, 99 mass% or less, preferably 98 mass% or less.

The (meth)acrylic acid can be copolymerized with alkyl (meth) acrylate. The (meth)acrylic acid is contained in the monomer component to suppress the formation of aggregates in the aqueous dispersion type pressure-sensitive adhesive composition. Specific examples of the (meth)acrylic acid include acrylic acid and methacrylic acid. The (meth)acrylic acids can be used singly or in combination. As the (meth)acrylic acid, preferably, acrylate is used. The ratio of (meth)acrylic acid in the monomer component is, for example, 1 mass% or more, preferably 2 mass% or more and, for example, 10 mass% or less, preferably 5 mass% or less. When the ratio of the acrylic acid is the above-described lower limit or more and the upper limit or less, the formation of aggregates can be suppressed.

The monomer component can further contain silicon atom-containing vinyl monomers. Examples of the silicon atom-containing vinyl monomer include 3-(meth)acryloyl oxypropyl trimethoxysilane. The ratio of the silicon atom-containing vinyl monomers in the monomer component is, for example, 0.005 mass% or more, preferably 0.01 mass% or more and, for example, 1 mass% or less, preferably 0.5 mass% or less.

The median size of the polymer particles is 0.10 µm or more, preferably 0.15 µm or more and, for example, 0.50 µm or less. When the median size of the polymer particles is less than the above-described lower limit (0.10 µm), a line defect caused by the aggregates of the aqueous dispersion type pressure-sensitive adhesive composition is formed in a pressure-sensitive adhesive layer (described below). When the median size of the polymer particles is the above-described upper limit (0.50 µm) or less, the excessive decrease in the viscosity of the aqueous dispersion type pressure-sensitive adhesive composition is suppressed, and the repellence of the aqueous dispersion type pressure-sensitive adhesive composition on a one-side surface of a substrate layer (described below) is suppressed. Thus, the aqueous dispersion type pressure-sensitive adhesive composition can stably be applied to the substrate layer. The median size of the polymer particles is measured by a laser diffraction method.

The water disperses the polymer particles in the aqueous dispersion type pressure-sensitive adhesive composition. For example, the water includes the water used for the emulsion polymerization of the monomer component. The ratio of the water in the aqueous dispersion type pressure-sensitive adhesive composition is not especially limited. The parts by mass of the water to 100 parts by mass of the polymer particles is, for example, 20 parts by mass or more, preferably 50 parts by mass or more and, for example, 250 parts by mass or less, preferably 150 parts by mass or less.

The ammonium ion (NH₄⁺) exists in the water. Specifically, the ammonium ion is ionized in the water. The ammonium ion of the present application does not include the ammonium cation ionically bonded with the carboxyl group of the (meth)acrylic acid in the polymer particles. The ratio of the ammonium ions in the aqueous dispersion type pressure-sensitive adhesive composition is appropriately adjusted so that the aqueous dispersion type pressure-sensitive adhesive composition described next has a desired pH. The presence of the ammonium ion in the aqueous dispersion type pressure-sensitive adhesive composition is identified by an ion chromatograph.

The pH of the aqueous dispersion type pressure-sensitive adhesive composition exceeds 9.0. The pH is preferably 9.5 or more and, for example, 11.0 or less. When the pH of the aqueous dispersion type pressure-sensitive adhesive composition is the above-described lower limit (9.0) or less, a line defect is formed in the pressure-sensitive adhesive layer. On the other hand, when the pH of the aqueous dispersion type pressure-sensitive adhesive composition is the above-described upper limit (11.0) or less, the ammonia odor can be reduced. The pH of the aqueous dispersion type pressure-sensitive adhesive composition is measured by a pH meter.

The aqueous dispersion type pressure-sensitive adhesive composition may contain an additive substance. Examples of the additive substance include tackifier resins. Examples of the tackifier resins include rosin resins, terpene resins, aliphatic petroleum resins, and aromatic petroleum resins. These can be used singly or in combination. Preferably, a terpene resin is used. Examples of the terpene resin include terpene phenol resins. The parts by mass of the tackifier resin to 100 parts by mass of the polymer particles is, for example, 10 parts by mass or more, preferably 20 parts by mass or more and, for example, 50 parts by mass or less, preferably 40 parts by mass or less.

The concentration of solid content in the aqueous dispersion type pressure-sensitive adhesive composition is, for example, 30 mass% or more, preferably 40 mass% or more and, for example, 70 mass% or less, preferably 60 mass% or less. When the concentration of solid content is the above-described lower limit or more, the formation of aggregates can be suppressed. When the concentration of solid content is the above-described upper limit or less, the pressure-sensitive adhesive layer can be thinned.

The method of producing the aqueous dispersion type pressure-sensitive adhesive composition is not especially limited. As the method of producing the aqueous dispersion type pressure-sensitive adhesive composition, for example, the monomer component is prepared first. Subsequently, the monomer component is dispersed into water to prepare an aqueous dispersion. Next, the monomer component in the aqueous dispersion is subject to emulsion polymerization. In the emulsion polymerization, the monomer component is heated in the presence of a polymerization initiator, an emulsifying agent, and, if necessary, a chain transfer agent. In this manner, a polymer particle aqueous dispersion in which the polymer particles are dispersed in the water is prepared.

Thereafter, aqueous ammonia is blended into the aqueous dispersion. Simultaneously, the additive agent is added to the polymer particle aqueous dispersion. Specifically, until all the carboxyl groups are neutralized, in other words, until the pH becomes 7, the aqueous ammonia is blended into the polymer particle aqueous dispersion. Subsequently, the additive agent is blended into the polymer particle aqueous dispersion. Thereafter, the aqueous ammonia is added to the polymer particle aqueous dispersion. The aqueous ammonia is added to the polymer particle aqueous dispersion until the pH of the polymer particle aqueous dispersion exceeds 9.0. The ammonia concentration of the aqueous ammonia is, for example, 1 mass% or more, preferably 5 mass% or more and, for example, 30 mass% or less, preferably 20 mass% or less. Alternatively, after an excessive amount of aqueous ammonia is blended in the polymer particle aqueous dispersion, if necessary, the additive agent can be blended into the polymer particle aqueous dispersion. Preferably, the polymer particle aqueous dispersion is neutralized with the aqueous ammonia. Next, the additive agent is added to the polymer particle aqueous dispersion. Thereafter, ammonia is added to the polymer particle aqueous dispersion so that the pH exceeds 9.0. In this manner, the aggregation of the pressure-sensitive adhesive is suppressed.

In this manner, an alkaline aqueous dispersion type pressure-sensitive adhesive composition is produced. The aqueous dispersion type pressure-sensitive adhesive composition contains the polymer particles, water, and ammonium ions.

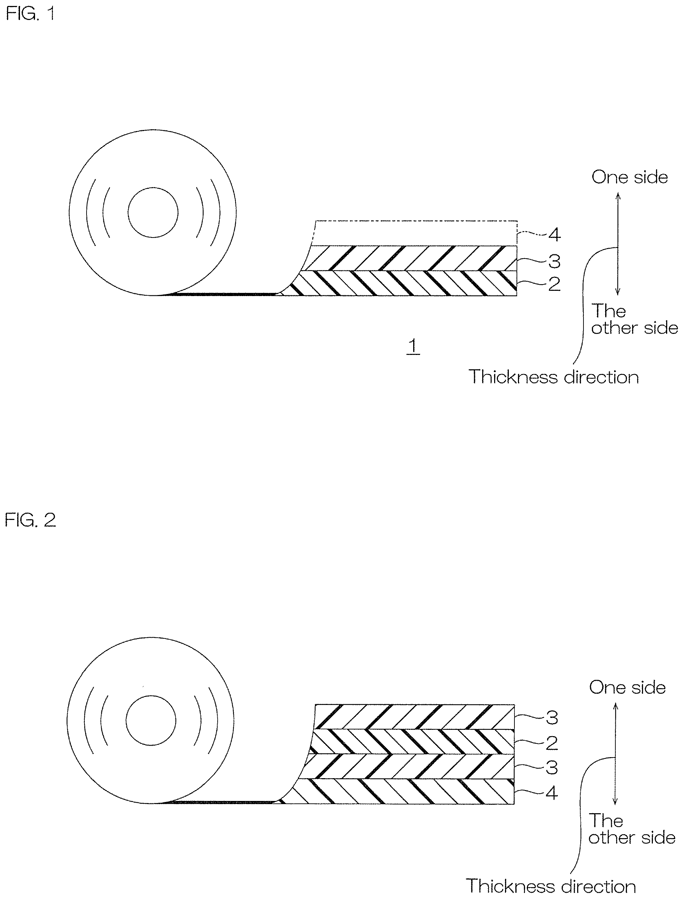

Next, an embodiment of a pressure-sensitive adhesive tape including a pressure-sensitive adhesive layer formed of the above-described aqueous dispersion type pressure-sensitive adhesive composition will be described with reference to FIG. 1.

As illustrated in FIG. 1, a pressure-sensitive adhesive tape 1 is prepared, for example, by rolling up a tape having a long-length shape. In the present application, the tape is a concept common to a sheet and a film. The tape, sheet, and film are not distinguished. The pressure-sensitive adhesive tape 1 includes a substrate layer 2 and a pressure-sensitive adhesive layer 3 toward one side in a thickness direction. The thickness direction is orthogonal to a long-length direction.

The substrate layer 2 is a film having a long-length shape. Examples of the substrate layer 2 include plastic films, paper, fabrics, non-woven fabrics, metal foils. Examples of the plastic films include polypropylene films, ethylene-propylene copolymer films, polyester films, and polyvinyl chloride films. Examples of the paper include Japanese paper and kraft paper. Examples of the fabrics include cotton fabrics and spun rayon fabrics. Examples of the non-woven fabrics include polyester non-woven fabrics and vinylon non-woven fabrics. Examples of the metal foils include stainless steel foils. A one-side surface and the other-side surface in the thickness of the substrate layer 2 is subjected to, for example, a release process to be releasable. Examples of the release process include a process using a silicone release agent. In such a case, the substrate layer 2 functions as a release liner. The substrate layer 2 has a thickness of, for example, 10 µm or more and, for example, 500 µm or less.

The pressure-sensitive adhesive layer 3 is disposed on the one-side surface in the thickness direction of the substrate layer 2. The pressure-sensitive adhesive layer 3 is formed of the above-described aqueous dispersion type pressure-sensitive adhesive composition. Specifically, the pressure-sensitive adhesive layer 3 made of a solid of the aqueous dispersion type pressure-sensitive adhesive composition. The pressure-sensitive adhesive layer 3 is thin. Specifically, the pressure-sensitive adhesive layer 3 has a thickness of, for example, 40 µm or less, preferably 30 µm or less, more preferably 25 µm or less and, for example, 5 µm or more. When the thickness of the pressure-sensitive adhesive layer 3 is the above-described upper limit or less, the pressure-sensitive adhesive tape 1 can be thinned. Meanwhile, when the pressure-sensitive adhesive layer 3 is thin as described above, the aggregates of the applied aqueous dispersion type pressure-sensitive adhesive composition easily affects the pressure-sensitive adhesive layer 3. Accordingly, a line defect is easily formed in the pressure-sensitive adhesive layer 3. However, the aqueous dispersion type pressure-sensitive adhesive composition of the present invention has a pH exceeding 9.0, and the median size of the polymer particles is 0.10 µm or more. Thus, the formation of a line defect as described above can be suppressed.

The content of the ammonium ions in the pressure-sensitive adhesive layer 3 is, for example, 800 µg/g or more and, for example, 1500 µg/g or less. When the content of the ammonium ion in the pressure-sensitive adhesive layer 3 is 800 µg/g or more, the formation of a line defect in the pressure-sensitive adhesive layer 3 is suppressed. When the content of the ammonium ion in the pressure-sensitive adhesive layer 3 is 1500 µg/g or less, the ammonia odor can be reduced.

The content of the ammonium ion in the pressure-sensitive adhesive layer 3 is precisely weighed. Specifically, about 0.15 g of the pressure-sensitive adhesive layer 3 is collected as a sample from the pressure-sensitive adhesive tape 1 and then the sample is precisely weighed. The sample is immersed into purified water and boiled and extracted at 120°C for 1 hour. The amount of the ammonium ions (NH⁴⁺) being extracted is quantified using an ion chromatograph. For details, in conformity to the description in the paragraph [0013] of Japanese Unexamined Patent Publication No. 2003-155462, the content of the ammonium ions in the pressure-sensitive adhesive layer 3 is measured.

Next, a method of producing the pressure-sensitive adhesive tape 1 will be described.

The substrate layer 2 is prepared first. Next, the aqueous dispersion type pressure-sensitive adhesive composition is applied to the substrate layer 2. To apply the aqueous dispersion type pressure-sensitive adhesive composition, a coater is used. Examples of the coater include dies and/or rolls. Specifically, as the coater, a roll coater is used. Examples of the roll coater include gravure roll coaters, reverse roll coaters, kiss roll coaters, dip roll coaters, and a knife roll coaters. Examples of the coater include slot die coaters. The application velocity is not especially limited.

Thereafter, the aqueous dispersion type pressure-sensitive adhesive composition is dried by heating. The conditions for the heating are not especially limited. By the drying, the water in the aqueous dispersion type pressure-sensitive adhesive composition is removed. In this manner, the pressure-sensitive adhesive layer 3 is formed on the one-side surface in the thickness direction of the substrate layer 2.

Thereafter, if necessary, a second release liner 4 (phantom line) is disposed on a one-side surface in the thickness direction of the pressure-sensitive adhesive layer 3. The second release liner 4 protects the one-side surface in the thickness direction of the pressure-sensitive adhesive layer 3 before the pressure-sensitive adhesive tape 1 is used. The second release liner 4 is released from the one-side surface in the thickness direction of the pressure-sensitive adhesive layer 3 when the pressure-sensitive adhesive tape 1 is used. As the second release liner 4, the same material as that of the substrate layer 2 is used.

<Operations and effects>

In the aqueous dispersion type pressure-sensitive adhesive composition, the median size of the polymer particles is 0.10 µm or more, and the pH exceeds 9.0. Thus, in the aqueous dispersion type pressure-sensitive adhesive composition, the aggregation of the polymer particles is suppressed. Accordingly, the aggregation of the polymer particles in the gap of the coater can be suppressed. Thus, the formation of a line defect caused by the aggregation can be suppressed in the pressure-sensitive adhesive layer 3.

Further, the pressure-sensitive adhesive tape 1 includes the above-described pressure-sensitive adhesive layer 3, and thus has high reliability of adhesion.

### <Variations of the pressure-sensitive adhesive tape>

In the variations below, the members and steps corresponding to those described in the embodiment above are designated by the same reference numerals, and the detailed descriptions thereof are omitted. In addition, each of the modified examples has the same operations and effects as the embodiments unless otherwise described. In addition, the embodiment and the modified examples can appropriately be combined.

As illustrated in FIG. 2, two pressure-sensitive adhesive layers 3 may be disposed on a one-side surface and the other-side surface in the thickness direction of a substrate layer 2. In a pressure-sensitive adhesive tape 1, a second release liner 4, the pressure-sensitive adhesive layer 3, the substrate layer 2, and the pressure-sensitive adhesive layer 3 are disposed toward one side of in a thickness direction.

### Example

The specific numeral values used in the description below, such as mixing ratios (contents), physical property values, and parameters can be replaced with the corresponding mixing ratio (contents), physical property values, parameters in the above-described "DESCRIPTION OF EMBODIMENTS", including the upper limit values (numeral values defined with "or less", and "less than") or the lower limit values (numeral values defined with "or more", and "more than"). The "parts" and "%" are based on mass unless otherwise specified.

### (Example 1)

In a reaction vessel equipped with a condenser tube, a nitrogen introducing tube, a thermometer, and a stirrer, 87 parts of butyl acrylate, 10 parts of 2-ethylhexyl acrylate, 4 parts of acrylic acid, 0.07 parts of 3-methacryloyloxypropyl-trimethoxysilane (manufactured by Shin-Etsu Chemical Co., Ltd., KBM-503), 0.05 parts of dodecanethiol (a chain transfer agent), 0.1 parts of 2,2'-azobis[2-(5-methyl-2-imidazoline-2-yl)propane] dihydrochloride (an initiator), and 2 parts of polyoxyethylene sodium lauryl sulfate (an emulsifier) were added to 100 parts of water, and thereby preparing an aqueous dispersion. Subsequently, the monomer component in the aqueous dispersion was subjected to emulsion polymerization, thereby obtaining a polymer particle aqueous dispersion in which the polymer particles were dispersed in the water.

Aqueous ammonia of 10% was added to the polymer particle aqueous dispersion to adjust (neutralize) the mixture to a pH of 7. Relative to 100 parts of the solid content of the polymer particle aqueous dispersion, 30 parts of the solid content of a terpene phenol resin (manufactured by ARAKAWA CHEMICAL INDUSTRIES, LTD., TAMANOLE E-200NT) was added as a tackifier. Furthermore, until the pH became 9.5, the aqueous ammonia (aqueous solution of 10%) was added to the polymer particle aqueous dispersion. In this manner, an aqueous dispersion type pressure-sensitive adhesive composition was obtained.

In the aqueous dispersion type pressure-sensitive adhesive composition, the concentration of the solid content was 54%. The median size of the polymer particles was 0.15 µm. The median size was measured by a laser diffraction method using LS13 320 manufactured by Beckman Coulter (a laser diffraction particle sizing analyzer, PIDS mode, refractive index for dispersed material: 1.48, refractive index for dispersion medium: 1.333).

Using a coater (slot die), the aqueous dispersion type pressure-sensitive adhesive composition was applied on a one-side surface of a substrate layer 2 made of a release liner (manufactured by Mitsubishi Chemical Corporation, DIA foil MR F75) so as to have a thickness of 25 µm after drying. (The one-side surface in the thickness direction of the release liner was subject to a release process using a silicone release agent for making it releasable in advance.) The application velocity was 20m/min and the application distance in a long-length direction was 500 m. The width of the substrate layer 2 was 1250 mm. In this manner, the pressure-sensitive adhesive tape 1 including the substrate layer 2 and the pressure-sensitive adhesive layer 3 was produced. The number of times of forming a line defect in the pressure-sensitive adhesive tape 1 was counted and was zero.

The content of the ammonium ions in the pressure-sensitive adhesive layer 3 was 800 µg/g or more.

### (Example 2)

In the same manner as Example 1, an aqueous dispersion type pressure-sensitive adhesive composition was obtained. However, the aqueous ammonia (aqueous solution of 10%) added to the polymer particle aqueous dispersion was increased and the pH was changed to 10.0.

The concentration of solid content in the dispersion type pressure-sensitive adhesive composition was 52 mass%. The content of the ammonium ions and the number of times of forming a line defect in the pressure-sensitive adhesive layer 3 are shown in Table 1. Similarly, the content of the ammonium ions and the number of times of forming a line defect of the following Examples and Comparative Examples are shown in Table 1.

### (Example 3)

In the same manner as Example 1, an aqueous dispersion type pressure-sensitive adhesive composition was obtained. However, the aqueous ammonia (aqueous solution of 10%) added to the polymer particle aqueous dispersion was increased and the pH was changed to 11.0.

The concentration of solid content in the dispersion type pressure-sensitive adhesive composition was 50 mass%.

### (Example 4)

In the same manner as Example 1, an aqueous dispersion type pressure-sensitive adhesive composition was obtained. However, the concentration of solid content in the dispersion type pressure-sensitive adhesive composition was 40 mass%.

### (Example 5)

In the same manner as Example 1, an aqueous dispersion type pressure-sensitive adhesive composition was obtained. However, the concentration of solid content in the dispersion type pressure-sensitive adhesive composition was 60 mass%.

### (Example 6)

In the same manner as Example 1, an aqueous dispersion type pressure-sensitive adhesive composition was obtained. However, the blended parts of acrylate was changed from 4 parts to 5 parts.

### (Example 7)

In the same manner as Example 1, an aqueous dispersion type pressure-sensitive adhesive composition was obtained. However, the blended parts of polyoxyethylene sodium lauryl sulfate (an emulsifier) was changed from 2 parts to 1.5 parts. The median size of the polymer particles was 0.30 µm.

### (Comparative Example 1)

In the same manner as Example 1, an aqueous dispersion type pressure-sensitive adhesive composition was obtained. However, the aqueous ammonia (aqueous solution of 10%) added to the polymer particle aqueous dispersion was reduced and the pH was changed to 8.0.

### (Comparative Example 2)

In the same manner as Example 1, an aqueous dispersion type pressure-sensitive adhesive composition was obtained. However, acrylic acid was not blended.

### (Comparative Example 3)

In the same manner as Example 1, an aqueous dispersion type pressure-sensitive adhesive composition was obtained. However, the blended parts of polyoxyethylene sodium lauryl sulfate (an emulsifier) was changed from 2 parts to 3 parts. The median size of the polymer particles was 0.08 µm.

### (Observations of Examples and Comparative Examples)

### <Comparison of Examples 1-3 and Comparative Example 1>

In Examples 1-3 and Comparative Example 1, the amount of the added aqueous ammonia (aqueous solution of 10%) was changed and the pH was changed. Then, the action of the pH to the aqueous dispersion type pressure-sensitive adhesive composition was evaluated. In Examples 1-3 in which the pH exceeded 9.0, a line defect was not formed. However, In Comparative Example 1 in which the pH was less than 9.0, a line defect was formed.

### <Comparison of Example 1 and Comparative Example 2>

Whereas acrylic acid was blended into the monomer component in Example 1, acrylic acid was not blended into the monomer component in Comparative Example 2. Then, the action of the presence or absence of the acrylic acid to the monomer component was evaluated. It is presumed that, in Example 1, ionic bonds of -COO⁻· NH⁴⁺ are formed on the surfaces of the polymer particles and the surface charges repel each other among the polymer particles. On the other hand, it is presumed that, in Comparative Example 1, the above-described repelling does not occur. Thus, the polymer particles easily aggregate.

### <Comparison of Example 1, Example 7, and Comparative Example 3>

In Example 1, Example 7, and Comparative Example 3, the amount of the emulsifier was changed, and the median size of the polymer particles was changed. Then, the median size of the polymer particles was evaluated. In Example 1 and Example 7 in which the median size was 0.10 µm or more, a line defect was not formed. On the other hand, in Comparative Example 3 in which the median size was less than 0.10 µm, a line defect was formed.

**Table 1**

| | | Example 1 | Example 2 | Example 3 | Example 4 | Example 5 | Example 6 | Example 7 | Comp. Ex. 1 | Comp. Ex. 2 | Comp. Ex. 3 |
|---|---|---|---|---|---|---|---|---|---|---|---|
| Monomer component | Ratio of acrylic acid (mass %) | 4 | 4 | 4 | 4 | 4 | 5 | 4 | 4 | 0 | 4 |
| Aqueous dispersion type pressure-sensitive adhesive composition | Solid content concentration (mass %) | 54 | 52 | 50 | 40 | 60 | 54 | 54 | 54 | 54 | 54 |
| | pH | 9.5 | 10.0 | 11.0 | 9.5 | 9.5 | 9.5 | 9.5 | 8.0 | 9.5 | 9.5 |
| Polymer particle | Median size (µm) | 0.15 | 0.15 | 0.15 | 0.15 | 0.15 | 0.15 | 0.30 | 0.15 | 0.15 | 0.08 |
| Pressure-sensitive adhesive tape | Ammonium ion content (µg/g) | 800 | 950 | 1100 | 800 | 800 | 800 | 800 | 600 | 800 | 800 |
| | The number of times of formation of a line defect | 0 | 0 | 0 | 0 | 0 | 0 | 0 | 8 | 10 | 5 |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Description of Reference Numerals

- 1: pressure-sensitive adhesive tape
- 2: substrate layer
- 3: pressure-sensitive adhesive layer

## Claims

1. An aqueous dispersion type pressure-sensitive adhesive composition comprising:
polymer particles made of a polymer of a monomer component containing alkyl (meth) acrylate and (meth)acrylic acid;
water dispersing the polymer particles; and
an ammonium ion existing in the water, wherein
a median size of the polymer particles is 0.10 µm or more, and
a pH of the aqueous dispersion type pressure-sensitive adhesive composition exceeds 9.0.

2. A pressure-sensitive adhesive tape comprising:
a substrate layer; and
a pressure-sensitive adhesive layer disposed on a one-side surface in a thickness direction of the substrate layer and formed of the aqueous dispersion type pressure-sensitive adhesive composition according to Claim 1.

3. The pressure-sensitive adhesive tape according to Claim 2, wherein
the pressure-sensitive adhesive layer has a thickness of 40 µm or less.

4. The pressure-sensitive adhesive tape according to Claim 2 or 3, wherein a content of the ammonium ions in the pressure-sensitive adhesive layer is 800 µg/g or more.
